# EUROPÄISCHE PATENTSCHRIFT

(11) **EP 0 638 010 B1**
(45) Veröffentlichungstag und Bekanntmachung des Hinweises auf die Patenterteilung: **11.12.1996**
(21) Anmeldenummer: 94908352.1
(22) Anmeldetag: 19.02.1994
(51) Int. Cl.: B23P 21/00, B62D 65/00, B25J 15/00, B23Q 7/04

(54) **VERFAHREN UND VORRICHTUNG ZUM AUTOMATISCHEN ASSEMBLIEREN UND BEARBEITEN VON MEHREREN BAUTEILEN**
METHOD AND DEVICE FOR THE AUTOMATIC ASSEMBLY AND WORKING OF SEVERAL COMPONENTS
PROCEDE ET DISPOSITIF PERMETTANT D'ASSEMBLER AUTOMATIQUEMENT PLUSIEURS PIECES ET D'EFFECTUER DES TRAVAUX DE FINITION

(30) Priorität: 23.02.1993 DE 4305470
(43) Veröffentlichungstag der Anmeldung: 15.02.1995
(73) Patentinhaber: KUKA Schweissanlagen & Roboter GmbH, D-86165 Augsburg (DE)
(72) Erfinder: EMERICH, Bruno, D-86163 Augsburg (DE)
(74) Vertreter: Ernicke, Hans-Dieter, Dipl.-Ing.
(86) Internationale Anmeldenummer: EP9400483
(87) Internationale Veröffentlichungsnummer: WO9419145

(56) Entgegenhaltungen:
- EP-A- 0 438 988
- WO-A-92/17312
- US-A- 4 611 749
- US-A- 4 627 785
- US-A- 4 740 133

## Beschreibung

Die Erfindung betrifft ein Verfahren und eine Vorrichtung zum automatischen Assemblieren und Bearbeiten von mehreren Bauteilen, in Form von Fahrzeugkarosserieteilen, mit den Merkmalen im Oberbegriff des Verfahrens- und Vorrichtungshauptanspruches. Ein solches Verfahren und eine solche Vorrichtung ist z.B. in US-A- 4611749 beschreiben.

In der Praxis ist es bekannt, mehrere zu fügende Bauteile in der vorgesehenen Fügeposition von Hand in eine Haltevorrichtung zu legen und die Bauteile durch einen Schweißroboter verschweißen zu lassen. Hierdurch entsteht aus den Einzelteilen eine Baugruppe, die von einem weiteren Roboter übernommen und dann zusätzlichen Bearbeitungsvorgängen zugeführt werden kann. Bei der vorbekannten Technik haben die Roboter reine Bearbeitungs- oder Handlings-Aufgaben. Die Assemblierung der Bauteile wird von Hand vorgenommen. Nachteilig ist hierbei der Personalaufwand und die Notwendigkeit, die Assemblierung der Bauteile und deren Bearbeitung in getrennten Arbeitsvorgängen durchzuführen. Für Bearbeitung und Handling sind zudem getrennte und monofunktionale Vorrichtungen und Maschinen vorgesehen. Dies vergrößert auch den apparativen Aufwand sowie den Zeitbedarf.

Es ist Aufgabe der vorliegenden Erfindung, ein Verfahren und eine Vorrichtung zur automatischen Assemblierung und Bearbeitung von mehreren Bauteilen aufzuzeigen, die wirtschaftlicher sind.

Die Erfindung löst diese Aufgabe mit den Merkmalen im Verfahrens- und Vorrichtungshauptanspruch.
Die Erfindung sieht vor, daß die Haltevorrichtung durch den Roboter geführt wird und sich in einem aktiven Assemblierungsvorgang selbst bestückt. Die an der Haltevorrichtung assemblierten Bauteile werden dann vom Roboter ein oder mehreren Bearbeitungsvorgängen zugeführt. Da Assemblieren und Bearbeiten der Bauteile erfolgt dabei in der vorgesehenen Fügefolge. Der Roboter hat mit seiner Haltevorrichtung dadurch kombinierte Handhabungs-, Assemblier- und Bearbeitungsfunktionen, wobei der Roboter auch selbst die Bearbeitung der Bauteile übernehmen kann. Die Vereinigung mehrerer Funktionen spart Zeit, Personalaufwand und Bauaufwand und ist dadurch insgesamt wirtschaftlicher als die vorbekannte Verfahren- und Vorrichtungstechnik. In den Unteransprüchen sind vorteilhafte Ausgestaltungen der Erfindung angegeben.

Die Erfindung ist in den Zeichnungen beispielsweise und schematisch dargestellt. Im einzelnen zeigen
- Fig. 1:: eine schematische Draufsicht auf eine Arbeitsstation,
- Fig. 2:: eine Draufsicht einer Haltevorrichtung mit mehreren Bauteilen und
- Fig. 3:: eine Seitenansicht der Haltevorrichtung entsprechend Pfeil III von Fig. 2.

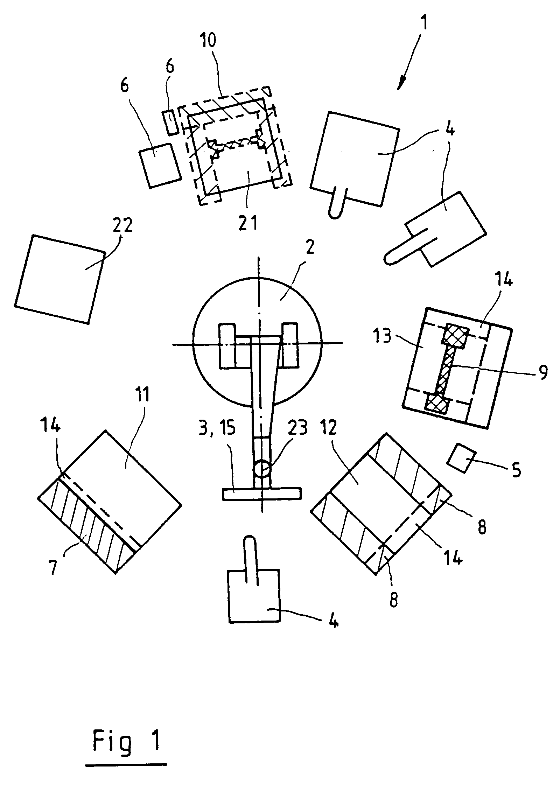

Fig. 1 zeigt in einer schematischen Darstellung ein Ausführungsbeispiel für eine Arbeitsstation (1), in der mit Hilfe eines Manipulators (2), insbesondere eines mehrachsigen Industrieroboters, mehrere Bauteile (7,8,9) zu einer Baugruppe (10) assembliert und gefügt werden. Die Arbeitsstation (1) kann den Charakter einer geschlossenen Arbeitszelle haben, in der alle Bearbeitungsvorgänge integriert ablaufen und die fertiggestellte Baugruppe (10) am Ende der Berarbeitung an einer Abgabestelle (22) die Arbeitsstation (1) wieder verläßt. Sie kann dort von Hand, von einem geeigneten Förderer oder einem weiteren Industrieroboter oder in sonstiger geeigneter Weise übernommen und abtransportiert werden. Bei der Baugruppe (10) kann es sich um ein Zwischenprodukt handeln, das anschließend einer weiteren Bearbeitung zugeführt wird. Die Baugruppe (10) kann aber auch ein Fertigprodukt sein.

In der Arbeitsstation (1) sind mehrere Bauteile (7,8,9) in die richtige Position zueinander zu bringen, was nachfolgend als Assemblieren bezeichnet wird. In der vorgesehenen Position sind sie außerdem miteinander zu verbinden oder in sonstiger Weise zu bearbeiten, was nachfolgend als Fügen bezeichnet wird.

Die Bauteile (7,8,9) werden einzeln oder in Gruppen an geeigneten Bereitstelleinrichtungen (11,12,13) zur Abholung bereitgehalten. Im gezeigten Ausführungsbeispiel stellt das Bauteil (7) eine Grundplatte dar. Art dieser sind zur Bildung eines U-förmigen Rahmens zwei flügelförmige Bauteile (8) anzuordnen und zu befestigen. Das Bauteil (9) stellt eine Traverse dar, die am Ende auf die Flügel (8) gelegt wird und mit diesen verschweißt wird. Bei den Bauteilen (7,8,9) kann es sich um beliebige Arten von Bauteilen handeln. Vorzugsweise sind es Teile einer Fahrzeugkarosserie.

Die Arbeitsstation (1) umfaßt ferner eine oder mehrere Bearbeitungsvorrichtungen (4,5,6). Hierbei handelt es sich beispielsweise bei den Bearbeitungsvorrichtungen (4) um stationäre Geräte, beispielsweise Schweißzangen, Bohrwerke, Fräser, Schraubvorrichtungen, Nietmaschinen oder dergleichen. Außerdem können bewegliche Bearbeitungsvorrichtungen (5,6) vorgesehen sein, die beispielsweise vom Industrieroboter (2) gehandhabt werden.

Im weiteren kann die Arbeitsstation (1) auch eine Zwischenablage (21) aufweisen, die geeignete Aufnahmen besitzt, auf denen die assemblierten Bauteile (7,8,9) zeitweilig abgelegt werden können, um beispielsweise dem Roboter einen Werkzeugwechsel und eine Bearbeitung dieser Bauteile (7,8,9) zu ermöglichen.

Die Bearbeitungsvorrichtungen (4,5,6), die Bereitstelleinrichtungen (11,12,13), die Zwischenablage (21) und die Abgabestelle (22) sind im Arbeitsbereich des Industrieroboters (2) angeordnet. Vorzugsweise sind sie im Kreis um den zentral stehenden oder hängenden Industrieroboter (2) positioniert.

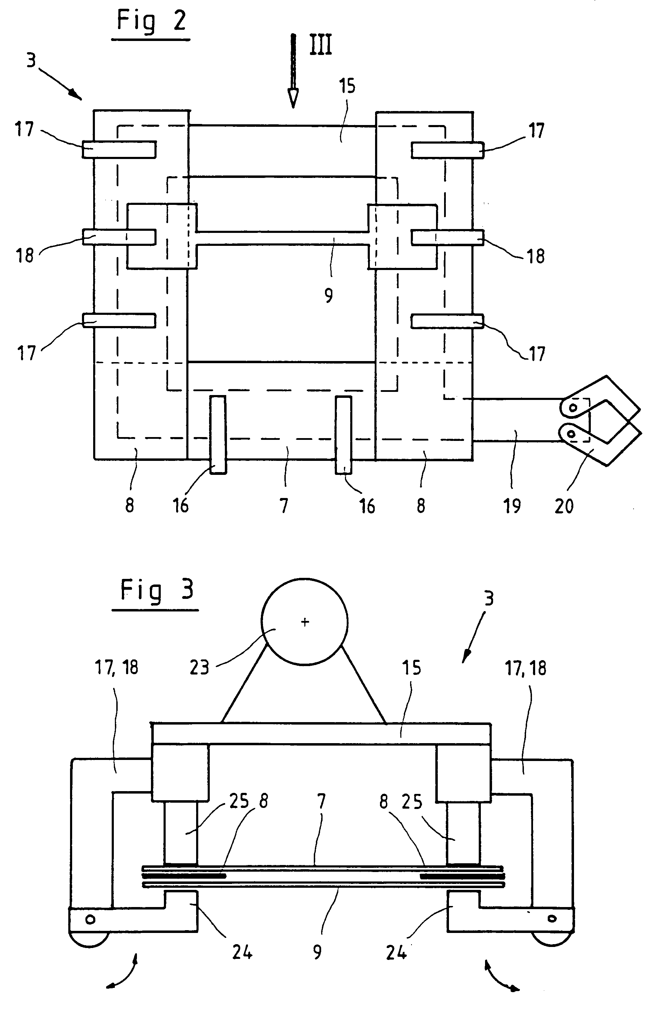

An der Roboterhand (23) ist eine Haltevorrichtung (3) befestigt, die in Fig. 2 und 3 näher dargestellt ist. Die Haltevorrichtung (3) wird vom Industrieroboter (2) geführt und direkt oder indirekt in ihren eigenen Bewegungsabläufen gesteuert. Die Haltevorrichtung (3) besteht beispielsweise aus einem Halterahmen (15), der mehrere getrennt voneinander bewegliche und steuerbare Greifwerkzeuge (16,17,18) für die einzelnen Bauteile (7,8,9) trägt. Am Halterahmen (15) kann außerdem eine Bearbeitungsvorrichtung, z.B. eine Schweißzange, angeordnet sein. Im Ausführungsbeispiel von Fig. 2 ist hierfür ein Werkzeuggreifer (20) vorgesehen, der eine solche Bearbeitungsvorrichtung fassen und betätigen kann. Der Werkzeuggreifer (20) ist beispielsweise über einen vorstehenden Ausleger (19) am Halterahmen (15) befestigt.

Die Greifwerkzeuge (16,17,18) sind den jeweiligen Bauteilen (7,8,9) zugeordnet und dazu in der vorgesehenen Assemblierstellung der Bauteile (7,8,9) am Halterahmen (15) positioniert. Im gezeigten Ausführungsbeispiel der Fig. 2 fassen die unteren Greifwerkzeuge (16) das Bauteil (7). Die vier beidseits angeordneten Greifwerkzeuge (17) fassen und halten die beiden Flügel des Bauteiles (8) und sichern auch ihre Lage auf dem Bauteil (7). Beidseits am Halterahmen (15) sind zwischen den paarweisen Greifwerkzeugen (7) die Greifwerkzeuge (18) für das Bauteil (9) angeordnet. Sie fassen das Bauteil (9) und halten es auf den beiden Flügeln des Bauteiles (8) fest.

Die Bereitstelleinrichtungen (11,12,13) halten die Bauteile (7,8,9) vorzugsweise in einer definierten Lage, in der sie der bahngesteuerte Industrieroboter (2), ggf. mit Hilfe von Sensoren, finden und mit der Haltevorrichtung (3) aufnehmen kann. Die Bereitstelleinrichtungen (11,12,13) weisen hierzu geeignete Positioniervorrichtungen (14), z.B. Prismenthalter, Klemmen, Indizes oder dgl. auf.

Alternativ ist es auch möglich, daß die Bauteile (7,8,9) relativ ungenau positioniert sind, wobei der Industrieroboter (2) mit der Haltevorrichtung (3) die Bauteile (7,8) in eine übernahmegerechte Position schiebt, kippt oder auf sonstige Weise transportiert und sie dann mit den Greifwerkzeugen (16,17,18) erfaßt und aufnimmt. Die Positioniervorrichtungen (14) können hierzu beispielsweise die Form von Zentrieranschlägen für die Begrenzung und Führung der Bewegung des Bauteiles (7,8,9) haben.

Die Greifwerkzeuge (16,17,18) fassen und halten die Bauteile (7,8,9). Die Greifwerkzeuge (16,17,18) können hierzu unterschiedlich ausgebildet sein und beispielsweise die Form von Saugvorrichtungen, Elektromagneten oder dgl. haben. Ihre Ausbildung richtet sich nach der Art der Bauteile und nach den vorgesehenen Bearbeitungsvorgängen. Universell einsetzbar sind die in Fig. 2 und 3 ausgeführten Spanngreifer, die eine in Pfeilrichtung (siehe Fig. 3) drehbare Spannklaue aufweisen. Die Spannklaue (24) kann in geöffneter Stellung über das aufzunehmende Bauteil (7,8,9) gestülpt werden. Zur Übernahme schwenkt die angetriebene Spannklaue (24) und preßt das Bauteil (7,8,9) gegen einen Stützsockel (25) am Greifwerkzeug (17,18,19). In Fig. 3 sind der Übersicht halber nur die seitlichen Greifwerkzeuge (17,18), nicht aber die unteren Greifwerkzeuge (16) dargestellt.

Das Verfahren zum automatischen Assemblieren und Bearbeiten der Bauteile (7,8,9) läuft wie folgt ab:

Im ersten Schritt holt der Industrieroboter (2) mit der Haltevorrichtung (3) das Bauteil (7) von der Bereitstelleinrichtung (11). Im zweiten Schritt bewegt sich der Industrieroboter (2) zur zweiten Bereitstelleinrichtung (12) und übernimmt dort mit der Haltevorrichtung (3) das Bauteil (8). In diesem Fall handelt es sich um ein Bauteil, das aus mehreren Einzelstücken besteht, die gleichzeitig oder nacheinander aufgenommen werden. Die Bauteile (7,8) werden bei der Übernahme von der Bereitstelleinrichtung (11,12) lagerichtig übernommen und an der Haltevorrichtung (3) assembliert. Die Haltevorrichtung (3) bestückt sich somit selbsttätig.

Die Bauteile (7,8) sind nun beispielsweise durch Schweißen miteinander zu verbinden. Im dritten Schritt bringt daher der Industrieroboter (2) entsprechend der vorgesehenen Fügefolge die Haltevorrichtung (3) mit den assemblierten Bauteilen (7,8) zu einer Bearbeitungsvorrichtung (4), hier einer zwischen den Bereitstelleinrichtungen (11,12) positionierten stationären Schweißzange. Die Bauteile (7,8) werden durch mehrere Schweißpunkte miteinander verbunden, beispielsweise geheftet.

In der vorgesehenen Fügefolge ist nun das dritte Bauteil (9) mit dem Bauteil (8) zu verbinden. Der Industrieroboter (2) fährt die dritte Bereitstelleinrichtung (13) an und nimmt dort das Bauteil (9) mit der Haltevorrichtung (3) an der vorgesehenen Assemblier-Position auf. Die assemblierten Bauteile (7,8,9) werden dann der benachbarten stationären Bearbeitungsvorrichtung für einen weiteren Schweißvorgang zugeführt. Hieran können sich in weiteren Bearbeitungsvorrichtungen (4) zusätzliche Bearbeitungsvorgänge anschließen.

In Abwandlung des vorbeschriebenen Bearbeitungsvorganges kann sich der Roboter (2) mit dem Werkzeuggreifer (20) auch eine bewegliche Bearbeitungsvorrichtung (5) holen, die beispielsweise Zusatzachsen aufweist und eine Bearbeitung der assemblierten Bauteile an der Haltevorrichtung (3) ermöglicht.

Fig. 1 zeigt eine weitere Gestaltungsvariante mit der Zwischenablage (21). Der Industrieroboter (2) legt hierzu die assemblierten und gefügten Bauteile (7,8) auf der Zwischenablage (21) in geeigneten Aufnahmen ab. Die Greifwerkzeuge (16,17,18) werden hierzu geöffnet und geben die Bauteile (7,8,9) frei. Mit der leeren Haltevorrichtung (3) fährt der Industrieroboter (2) dann zurück und holt sich mit dem Werkzeuggreifer (20) eine oder mehrere bewegliche Bearbeitungsvorrichtungen (6), beispielsweise Schweißzangen, Klebeauftragspistolen, Bohrer, Nietzangen, Schleifwerkzeuge etc. Damit werden dann vom Industrieroboter (2) Bearbeitungsvorgänge auf den abgelegten Bauteilen (7,8,9) vorgenommen. Nach Beendigung gibt der Industrieroboter (2) mit der Haltevorrichtung (3) die Bearbeitungsvorrichtungen (6) wieder ab, nimmt die Bauteile (7,8) wieder auf und bringt sie schließlich zur Abgabestelle (22).

Im vorbeschriebenen Ausführungsbeispiel sah die Fügefolge eine abwechselnde Aufnahme und Bearbeitung der Bauteile (7,8,9) vor. Die Fügefolge kann variieren, indem beispielsweise mehr als zwei Bauteile einzeln oder gruppenweise nacheinander aufgenommen, assembliert und dann erst einem Bearbeitungsvorgang zugeführt werden. Ferner ist es möglich, eine Gruppe von Bauteilen gleichzeitig aufzunehmen, anschließend gleich einen Bearbeitungsvorgang auszuführen und danach erst das nächste Bauteil aufzunehmen.

Das beschriebene Ausführungsbeispiel kann auch in anderer Weise variiert werden. Beispielsweise können an einer Bereitstelleinrichtung nacheinander verschiedene Bauteile angeliefert und zur Abholung positioniert werden. Die Bereitstelleinrichtungen können Magazine und Fördermittel beinhalten.
Ferner kann die Haltevorrichtung (3) anstelle oder zusätzlich zum Werkzeuggreifer (20) eine festangeordnete Bearbeitungsvorrichtung mitführen.
Im bevorzugten Ausführungsbeispiel werden an der Zwischenablage (21) die Bauteile (7,8,9) von der Haltevorrichtung (3) gelöst. Alternativ können sie auch an der Haltevorrichtung (3) verbleiben, wobei diese von der Roboterhand (23) mittels einer geeigneten Werkzeugwechseleinrichtung gelöst wird. Der Industrieroboter (2) kann dann mit der Roboterhand (23) direkt eine Bearbeitungsvorrichtung (5,6) greifen und nach der Bearbeitung die Haltevorrichtung (3) wieder aufnehmen.

### BEZUGSZEICHENLISTE

- 1: Arbeitsstation
- 2: Manipulator, Industrieroboter
- 3: Haltevorrichtung
- 4: Bearbeitungsvorrichtung
- 5: Bearbeitungsvorrichtung
- 6: Bearbeitungsvorrichtung
- 7: Bauteil
- 8: Bauteil
- 9: Bauteil
- 10: Baugruppe
- 11: Bereitstelleinrichtung
- 12: Bereitstelleinrichtung
- 13: Bereitstelleinrichtung
- 14: Positioniervorrichtung
- 15: Halterahmen
- 16: Greifwerkzeug
- 17: Greifwerkzeug
- 18: Greifwerkzeug
- 19: Ausleger
- 20: Werkzeuggreifer
- 21: Zwischenablage
- 22: Abgabestelle
- 23: Roboterhand
- 24: Spannklaue
- 25: Stützsockel

## Patentansprüche

1. Verfahren zum automatischen Assemblieren und Bearbeiten von mehreren Bauteilen (7,8,9) in Form von Fahrzeugkarosserieteilen, in einer Arbeitsstation (1) mit einem Manipulator (2), einer manipulatorgeführten Haltevorrichtung (3) und einer oder mehreren Bearbeitungsvorrichtung(en) (4,5,6), dadurch **gekennzeichnet**, daß
- die Assemblier- und Bearbeitungsvorgänge in einer geschlossenen Arbeitszelle (1) integriert ablaufen, wobei
- die Bauteile (7,8,9) an einer oder mehreren Bereitstelleinrichtung(en) (11,12,13) in der Arbeitszelle (1) bereitgestellt werden,
- von wo der Manipulator (2) mit der Haltevorrichtung (3) und mehreren eigenständig steuerbaren Greifwerkzeugen (16,17,18) die Bauteile (7,8,9) einzeln oder gruppenweise selbsttätig aufnimmt,
- die Bauteile (7,8,9) in der vorgesehenen gegenseitigen Zuordnung an einem Halterahmen der Haltevorrichtung (3) zu einer Baugruppe (10) assembliert und gespannt werden,
- die aufgenommenen Bauteile (7,8,9) entsprechend der vorgesehenen Fügefolge während und/oder nach der Assemblierung mindestens einem Bearbeitungsvorgang zugeführt und
- der Manipulator (2) die assemblierte Baugruppe (10) nach der Fertigstellung an eine Abgabestelle (22) oder an einen anderen Manipulator übergibt.

2. Verfahren nach Anspruch 1, dadurch **gekennzeichnet**, daß mehrere bereitgestellte Bauteile (7,8,9) nacheinander aufgenommen und in der vorgesehenen Zuordnung assembliert werden.

3. Verfahren nach Anspruch 1 oder 2, dadurch **gekennzeichnet**, daß die Bauteile (7,8,9) stationär bereitgestellt werden.

4. Verfahren nach Anspruch 1, 2 oder 3, dadurch **gekennzeichnet**, daß die Bauteile (7,8,9) in einer definierten Lage bereitgestellt werden.

5. Verfahren nach einem der Ansprüche 1 bis 4, dadurch **gekennzeichnet**, daß der Manipulator (2) eine Bearbeitungsvorrichtung (5,6) mitführt, wobei der Manipulator (2) die assemblierten Bauteile (7,8,9) an eine Zwischenablage (21) abgibt und dann an der Zwischenablage (21) selbst bearbeitet.

6. Verfahren nach Anspruch 5, dadurch **gekennzeichnet**, daß der Manipulator (2) die Bauteile (7,8,9) nach der Bearbeitung mit der Haltevorrichtung (3) wieder aufnimmt.

7. Vorrichtung zur Durchführung des Verfahrens nach Anspruch 1 oder einem der folgenden, mit einem Manipulator (2), einer Haltevorrichtung (3) und einer oder mehreren Bearbeitungsvorrichtung(en) (4,5,6), wobei die Haltevorrichtung (3) am Manipulator (2) angeordnet ist, dadurch **gekennzeichnet**, daß
- eine geschlossenen Arbeitszelle (1) mit einem integrierten Anlauf der Assemblier- und Bearbeitungsvorgänge vorgesehen ist,
- die Arbeitszelle (1) ein oder mehrere Bereitstelleinrichtung(en) (11,12,13) für die Bauteile (7,8,9) aufweist,
- die Arbeitszelle (1) eine Abgabestelle (22) für die fertig assemblierte und bearbeitete Baugruppe (10) besitzt,
- die Haltevorrichtung (3) einen Halterahmen (15) zur Aufnahme der assemblierten Bauteile (7,8,9) aufweist,
- die Haltevorrichtung (3) mehrere, eigenständig steuerbare Greifwerkzeuge (16,17,18) hat und
- die Greifwerkzeuge (16,17,18) am Halterahmen (15) entsprechend der vorgesehenen Assemblierungs-Zuordnung der Bauteile (7,8,9) angeordnet sind.

8. Vorrichtung nach Anspruch 7, dadurch **gekennzeichnet**, daß an der Haltevorrichtung (3) eine Bearbeitungsvorrichtung (5,6) angeordnet ist.

9. Vorrichtung nach Anspruch 7 oder 8, dadurch **gekennzeichnet**, daß die Haltevorrichtung (3) einen steuerbaren Werkzeuggreifer (20) zur Aufnahme einer Bearbeitungsvorrichtung (5,6) aufweist.

10. Vorrichtung nach Anspruch 7, 8 oder 9, dadurch **gekennzeichnet**, daß im Arbeitsbereich des Manipulators (2) eine oder mehrere Bereitstelleinrichtung(en) (11,12,13) für die Bauteile (7,8,9) angeordnet sind.

11. Vorrichtung nach Anspruch 10, dadurch **gekennzeichnet**, daß die Bereitstelleinrichtung (11,12,13) eine Positioniervorrichtung (14) für das oder die Bauteil(e) (7,8,9) aufweist.

12. Vorrichtung nach einem der Ansprüche 7 bis 11, dadurch **gekennzeichnet**, daß im Arbeitsbereich des Manipulators (2) eine Zwischenablage (21) für die assemblierten Bauteile (7,8,9) angeordnet ist.

## Claims

1. A method for the automatic assembly and processing of a plurality of components (7, 8, 9) in the form of vehicle body parts, in a working station (1) having a manipulator (2), a holding device (3) guided by the manipulator, and one or more processing device(s) (4, 5, 6), characterized in that
- the assembly and processing procedures run in integrated manner in a closed working cell (1),
- the components (7, 8, 9) are supplied to one or more supply means (11, 12, 13) in the working cell (1),
- from where the manipulator (2) automatically takes up the components (7, 8, 9) individually or in groups by means of the holding device (3) and a plurality of independently controllable gripping tools (16, 17, 18),
- in the mutual association provided, the components (7, 8, 9) are assembled to form an assembly (10) and clamped on a holding frame of the holding device (3),
- during and/or after assembly, according to the joining sequence provided, the taken-up components (7, 8, 9) are advanced to at least one processing procedure, and
- after completion, the manipulator (2) transfers the assembled assembly (10) to a discharging area (22) or to another manipulator.

2. A method according to Claim 1, characterized in that a plurality of supplied components (7, 8, 9) are taken up one after another and assembled in the association provided.

3. A method according to Claim 1 or 2, characterized in that the components (7, 8, 9) are supplied in a stationary condition.

4. A method according to Claim 1, 2 or 3, characterized in that the components (7, 8, 9) are supplied in a defined position.

5. A method according to one of Claims 1 to 4, characterized in that the manipulator (2) carries a processing device (5, 6), in which case the manipulator (2) discharges the assembled components (7, 8, 9) to an intermediate storage area (21) and then processes them at the intermediate storage area (21) itself.

6. A method according to Claim 5, characterized in that, after processing, the manipulator (2) takes the components (7, 8, 9) up again by means of the holding device (3).

7. A device for carrying out the method according to Claim 1 or one of the following claims, having a manipulator (2), a holding device (3) and one or more processing device(s) (4, 5, 6), the holding device (3) being arranged on the manipulator (2), characterized in that
- there is provided a closed working cell (1) in which the assembly and processing procedures run in integrated manner,
- the working cell (1) has one or more means (11, 12, 13) for supplying the components (7, 8, 9),
- the working cell (1) has a discharging area (22) for the assembled and processed assembly (10),
- the holding device (3) has a holding frame (15) for taking up the assembled components (7, 8, 9),
- the holding device (3) has a plurality of independently controllable gripping tools (16, 17, 18), and
- the gripping tools (16, 17, 18) are arranged on the holding frame (15) according to the assembly association provided for the components (7, 8, 9).

8. A device according to Claim 7, characterized in that a processing device (5, 6) is arranged on the holding device (3).

9. A device according to Claim 7 or 8, characterized in that the holding device (3) has a controllable tool gripping means (20) for taking up a processing device (5, 6).

10. A device according to Claim 7, 8 or 9, characterized in that there are arranged in the working region of the manipulator (2) one or more means (11, 12, 13) for supplying the components (7, 8, 9).

11. A device according to Claim 10, characterized in that the supply means (11, 12, 13) has a positioning device (14) for the component(s) (7, 8, 9).

12. A device according to one of Claims 7 to 11, characterized in that there is arranged in the working region of the manipulator (2) an intermediate storage area (21) for the assembled components (7, 8, 9).

## Revendications

1. Procédé pour assembler et usiner automatiquement plusieurs pièces (7, 8, 9) en forme de pièces de carrosserie de véhicules automobiles dans un poste (1) de travail comportant un manipulateur (2), un dispositif (3) de maintien guidé par le manipulateur et un ou plusieurs dispositifs (4, 5, 6) d'usinage, caractérisé en ce que
- les opérations d'assemblage et d'usinage se déroulent de manière intégrée dans une cellule (1) de travail fermée,
- les pièces (7, 8, 9) sont mises à disposition dans la cellule (1) de travail sur une ou plusieurs installations (11, 12, 13) de mise à disposition,
- d'où le manipulateur (2) reçoit automatiquement les pièces (7, 8, 9), individuellement ou par groupe, par le dispositif (3) de maintien et plusieurs outils (16, 17, 18) de préhension qui peuvent être commandés de manière autonome,
- les pièces (7, 8, 9) sont assemblées et cadrées en l'association mutuelle prévue, en une unité (10), sur un cadre de maintien du dispositif (3) de maintien,
- les pièces (7, 8, 9) reçues sont, en fonction de la succession de montage prévue, envoyées à une opération d'usinage pendant et/ou après l'assemblage, et
- le manipulateur (2) transmet, après la finition, l'unité (10) assemblée à un point (22) de sortie ou à un autre manipulateur.

2. Procédé suivant la revendication 1, caractérisé en ce que plusieurs pièces (7, 8, 9) mises à disposition sont reçues successivement et assemblées suivant l'association prévue.

3. Procédé suivant la revendication 1 ou 2, caractérisé en ce que les pièces (7, 8, 9) sont mises à disposition de manière fixe.

4. Procédé suivant la revendication 1, 2 ou 3, caractérisé en ce que les pièces (7, 8, 9) sont mises à disposition en une position définie.

5. Procédé suivant une des revendications 1 à 4, caractérisé en ce que le manipulateur (2) a avec soi un dispositif (5, 6) d'usinage, le manipulateur (2) transmettant les pièces (7, 8, 9) assemblées à un dépôt (21) intermédiaire et usinant ensuite sur le dépôt intermédiaire lui-même.

6. Procédé suivant la revendication 5, caractérisé en ce que le manipulateur (2) reçoit à nouveau, après l'usinage, les pièces (7, 8, 9) par le dispositif (3) de maintien.

7. Dispositif de mise en oeuvre du procédé suivant la revendication 1 ou une des suivantes, comportant un manipulateur (2), un dispositif (3) de maintien et un ou plusieurs dispositifs (4, 5, 6) d'usinage, le dispositif (3) de maintien étant monté sur le manipulateur (2), caractérisé en ce que
- il est prévu une cellule (1) de travail fermée ayant un déroulement intégré des opérations d'assemblage et d'usinage,
- la cellule (1) de travail comporte une ou plusieurs installations (11, 12, 13) de mise à disposition des pièces (7, 8, 9),
- la cellule (1) de travail a un point (22) de sortie de l'unité (10) finie d'assemblage et d'usinage,
- le dispositif (3) de maintien comporte un cadre (15) de maintien pour recevoir les pièces (7, 8, 9) assemblées,
- le dispositif (3) de maintien a plusieurs outils (16, 17, 18) de préhension pouvant être commandés de manière autonome, et
- les outils (16, 17, 18) de préhension sont montés sur le cadre (15) de maintien, suivant l'association d'assemblage prévue des pièces (7, 8, 9).

8. Dispositif suivant la revendication 7, caractérisé en ce qu'un dispositif (5, 6) d'usinage est monté sur le dispositif (3) de maintien.

9. Dispositif suivant la revendication 7 ou 8, caractérisé en ce que le dispositif (3) de maintien comporte, pour recevoir un dispositif (5, 6) d'usinage, une griffe (20) à outil qui peut être commandée.

10. Dispositif suivant la revendication 7, 8 ou 9, caractérisé en ce qu'une ou plusieurs installations (11, 12, 13) de mise à disposition des pièces (7, 8, 9) sont montées dans l'espace du manipulateur (2).

11. Dispositif suivant la revendication 10, caractérisé en ce que l'installation (11, 12, 13) de mise à disposition comporte un dispositif (14) de mise en position de la pièce ou des pièces (7, 8, 9).

12. Dispositif suivant une des revendications 7 à 11, caractérisé en ce qu'un dépôt (21) intermédiaire des pièces (7, 8, 9) assemblées est monté dans l'espace du manipulateur (2).
